(19) Europäisches Patentamt
European Patent Office
Office européen des brevets

(11) Veröffentlichungsnummer: **0 032 357**
**B1**

(12) # EUROPÄISCHE PATENTSCHRIFT

(45) Veröffentlichungstag der Patentschrift: **21.09.83**

(51) Int. Cl.³: **A 01 N 59/00** // C02F1/76, (A01N59/00, 43/70)

(21) Anmeldenummer: **80810383.2**

(22) Anmeldetag: **12.12.80**

(54) **Verwendung von 2-Chlor-4,6-diamino-s-triazinen als Algicide.**

(30) Priorität: **18.12.79 CH 11213/79**

(43) Veröffentlichungstag der Anmeldung: **22.07.81 Patentblatt 81/29**

(45) Bekanntmachung des Hinweises auf die Patenterteilung: **21.09.83 Patentblatt 83/38**

(84) Benannte Vertragsstaaten: **BE DE FR GB IT NL**

(73) Patentinhaber: **CIBA-GEIGY AG, Patentabteilung Postfach, CH-4002 Basel (CH)**

(72) Erfinder: **Lorenz, Joachim, Dr., Im Tiefen Weg 17, D-6140 Bensheim 3 (DE)**
Erfinder: **Grade, Reinhardt, Dr., Tulpenweg 11, D-6140 Bensheim (DE)**

(56) Entgegenhaltungen:

**FR-A-2 295 761**

**CHEMICAL ABSTRACTS, Band 89, Nr. 13, 25. September 1978, Seite 236, Nr. 101620v Columbus, Ohio, U.S.A. S. AMRCOCI et al.: «Effect of some triazinic derivatives on photosynthesis of the green algae Scenedesmus quadricauda and Chlorella vulgaris»**
**CHEMICAL ABSTRACTS, Band 88, Nr. 7, 13. Februar 1978, Seite 161, Nr. 46185j Columbus, Ohio, U.S.A. B. SKARKA et al.: «Antialgal properties of substances to be used in the protection of industrial cooling waters»**
**CHEMICAL ABSTRACTS, Band 87, Nr. 11, 12. September 1977, Seite 150, Nr. 79553k Columbus, Ohio, U.S.A. K. HAWXBY et al.: «Effects of various classes of herbicides on four species of algae»**

(56) Entgegenhaltungen:

**RESEARCH DISCLOSURE, Nr. 160, August 1977, Seite 28, Mitteilung Nr. 16047 Industrial Opportunities Ltd. Honeywell, Havant, G.B. «3-Isothiazolone/halogen synergism»**

**EP 0 032 357 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Verwendung von 2-Chlor-4,6-diamino-s-triazinen als Algicide

Die Erfindung betrifft die Verwendung bestimmter 2-Chlor-4,6-diamino-s-triazine in Kombination mit aktivem Halogen, insbesondere Chlor zur Bekämpfung von Algen in Wasserbecken, insbesondere in Schwimmbecken, sowie in Kühlwasserkreisläufen.

Das Wasser eines Schwimmbeckens kann durch ständigen Zulauf von Frischwasser und Ablauf von Gebrauchtwasser frisch gehalten werden. Dies verursacht jedoch einen hohen Verbrauch an Frischwasser. Üblicherweise werden Schwimmbecken nur selten mit Frischwasser gefüllt und man versucht die eingefüllte Wassermenge möglicht lange sauber, keimfrei und bewuchsfrei zu halten. Dies geschieht meist durch zirkulierende Filtration des Wassers sowie durch Zusatz von keimtötenden (baktericiden) und algenbekämpfenden (algiciden) Chemikalien. Dies gilt für Freibäder ebenso wie für Hallenbäder und gilt für andere Wasserbecken sowie für Kühlwasserkreisläufe.

Für die bakterizide Behandlung werden vorwiegend Hypochlorite oder andere «aktives Halogen» abgebende Substanzen verwendet. Auch Ozon wird in gewissem Umfang verwendet. Als Algicide fanden bisher vor allem quaternäre Ammoniumverbindungen Verwendung sowie Kupfer- oder Silber-Verbindungen. In neuerer Zeit wurden hierfür auch Triazinderivate vorgeschlagen, die als Herbicide bekannt waren [siehe Chem. Abstracts *87* (1977), 79553 k und *88* (1978), 46185 j] sowie 3-Isothiazolone (Research Disclosure *160*, August 1977, 16047).

Quaternäre Ammoniumverbindungen lassen sich zwar mit Chlor kombinieren (s. FR-A-2 295 761), haben jedoch den Nachteil, dass sie zum Schäumen neigen, den pH-Wert erhöhen, gegen Blaualgen nur geringe Aktivität besitzen und ihre Wirkung rasch abklingt. Kupfer- und Silberverbindungen haben den Nachteil, dass sie das Wasser verfärben, gegen Grünalgen nicht wirksam sind und ihre Wirkung ebenfalls rasch abklingt.

3-Isothiazolone haben den Nachteil, dass sie unter Lichteinwirkung photolytisch abgebaut werden [Agricult. and Food Chemistry *23* (1975), 1075]. Die erwähnten Triazinderivate haben diese Nachteile nicht. Die 2-Alkylthio-4,6-diamino-s-triazine (z.B. Ametryn, Prometryn oder Terbutryn) besitzen eine so hohe Wirksamkeit, dass sie z.B. zur Algenbekämpfung in natürlichen Seen erfolgreich verwendet werden. Sie lassen sich jedoch nicht in chlorierten Wasserbecken verwenden, da sie gegenüber Chlor unbeständig sind.

Es wurde bereits vorgeschlagen, diese 2-Alkylthio-4,6-diamino-s-triazine in Kombination mit dem schwächer oxydierenden Jod als Desinfektionsmittel zu verwenden, was aber erheblich höhere Kosten verursachen würde und daher in der Praxis keine Anwendung findet (E. L. Nilson, R. F. Unz, Appl. & Enviromental Microbiology, Dec. 1977, 815-822).

Man hat daher für die Algenbekämpfung in chlorhaltigen Wasserbecken das Simazin [2-Chlor-4,6-bis-(äthylamino)-s-triazin] vorgeschlagen, das gegen Chlor weitgehend stabil ist. Die algicide Wirksamkeit des Simazin ist allerdings wesentlich geringer als die der oben erwähnten Alkylthiotriazine. Eine Folge davon ist, dass man es in Konzentrationen verwenden muss, die auch gegen höhere Pflanzen wirken. Dies äussert sich nachteilig, wenn z.B. ein Schwimmbecken von Zierpflanzen umgeben ist, die durch Spritzwasser aus dem Becken beeinträchtigt werden.

Ziel der Erfindung war es, Triazinderivate zu finden, die gegen Halogene nicht empfindlich sind und deren Wirksamkeit gegen Algen um so viel höher als ihre Wirksamkeit gegen höhere Pflanzen ist, dass man in einem für die Praxis genügend breiten Konzentrationsbereich den Algenbewuchs völlig unterbinden kann, ohne dass Gefahr für höhere Pflanzen besteht.

Es wurde gefunden, dass bestimmte 2-Chlor-4,6-diamino-s-triazine eine solche, genügend stark abgestufte Wirksamkeit gegen Algen einerseits und höhere Pflanzen andererseits aufweisen und dass sich diese Abstufung durch Kombination mit Halogen, insbesondere Chlor bzw. Chlor abgebenden Substanzen, in synergistischer Weise steigern lässt.

Gegenstand der Erfindung ist daher die Verwendung eines Gemisches aus

a) einem 2-Chlor-4,6-diamino-s-triazin der Formel I

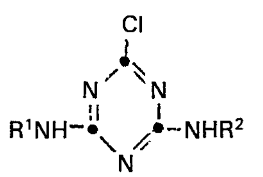

I

worin $R^1$ Alkyl mit 2-5 C-Atomen oder Cycloalkyl mit 3-5 C-Atomen und $R^2$ Alkyl mit 3-5 C-Atomen oder Cycloalkyl mit 3-5 C-Atomen ist, und

b) aktivem Halogen oder einem Aktivhalogen abgebenden Mittel zur gleichzeitigen Algenbekämpfung und Desinfektion in Wasserbecken, insbesondere in Schwimmbecken, sowie in Kühlwasserkreisläufen, wobei die Komponente a) in einer Konzentration von 0,1 bis 1 mg/l und die Komponente b) in einer Konzentration von 0,05 bis 3 mg/l verwendet wird.

Der Rest $R^1$ kann ein unverzweigter oder verzweigter Alkylrest sein, wie z.B. Äthyl, Propyl, Isopropyl, n-Butyl, Isobutyl, sec.-Butyl, tert.-Butyl oder Isoamyl. $R^2$ als Alkyl kann ebenfalls unverzweigt oder verzweigt sein, wie z.B. Propyl, Isopropyl, n-Butyl, Isobutyl, sec.-Butyl. tert.-Butyl oder Isoamyl. $R^1$ und $R^2$ als Cycloalkyl können Cyclobutyl oder Cyclopentyl, insbesondere aber Cyclopropyl, sein.

Die erfindungsgemäss verwendbaren Triazine der Formel I sind bekannte Verbindungen und finden teilweise als Herbicide technische Verwendung. Bevorzugt ist die Verwendung von 2-Chlor-4-äthylamino-6-tert.-butyl-s-triazin, das auch unter dem Kurznamen Terbutylazin bekannt ist, in Kombination mit Aktivchlor.

Das hauptsächliche Einsatzgebiet der Erfindung sind Schwimmbecken, es kommen aber auch andere

Wasserbecken in Frage wie z.B. Regenwassersammelbecken, Feuerlöschteiche oder Vorratstanks für Nutzwasser. Bei den in solchen Wasserbecken auftretenden Algen handelt es sich vor allem um blaugrüne Algen (black algae), zu denen z.B. Oscillatoria und Phormidium gehören und die vor allem an den Wänden der Becken wachsen, sowie um grüne Algen, wie z.B. Chlorella und Scenedesmus, die frei schwimmend sind und die grüne Farbe des Wassers verursachen.

Ein weiteres Einsatzgebiet für die erfindungsgemässen Gemische sind Kühlwasserkreisläufe, wie sie in z.B. Kraftwerken, chemischen Produktionsanlagen, Wärmepumpen oder Klimaanlagen vorliegen. Ein Algenbewuchs in solchen Anlagen verschlechtert den Wärmeübergang und damit die Wirksamkeit des Kreislaufes.

Bevorzugt wird als Komponente b) des erfindungsgemäss verwendeten Gemisches aktives Chlor oder ein Aktivchlor abgebendes Mittel eingesetzt. Aktives Halogen abgebende Mittel sind z.B. Hypochlorite wie die als «Chlorbleichlauge» in den Handel gebrachten vorwiegend Natriumhypochlorit enthaltenden Lösungen, sowie Chlorkalk, Chloramine, Trichlorisocyanursäure, Dichlorisocyanursäure, und deren Natriumsalze, Dichlordimethylhydantoin, Chlor-brom-dimethylhydantoin und Dibromdimethylhydantoin. Bei grösseren Wasserbecken wird auch das direkte Einleiten von Chlorgas oder Bromchlorid praktiziert. Der Gehalt an «aktivem Halogen» kann durch iodometrische Titration des behandelten Wassers gemessen werden.

Die zur Verhinderung des Algenwachstums benötigte Menge an Triazinverbindungen der Formel I in Kombination mit aktivem Chlor beträgt etwa 0,1 bis 1 mg/l, die Konzentration an «aktivem Chlor» soll etwa 0,05 bis 3 mg/l betragen. Dies ist eine Chlormenge wie sie üblicherweise zur Desinfektion von Schwimmbädern ohnedies benötigt wird. Es ist also nicht nötig, zur Ausbildung der synergistischen Wirkung die übliche Chlormenge zu erhöhen. In Kühlwasserkreisläufen kann bei Vorhandensein Chlorverbrauchender Verunreinigungen auch eine höhere Chlormenge erforderlich sein, insbesondere bei diskontinuierlicher Behandlung. Diese niedrigen Konzentrationen an Triazinderivaten in Kombination mit Chlor sind für höhere Pflanzen weitgehend unschädlich. Demhingegen muss bei Verwendung der bisher bekannten 2-Chlor-4,6-diaminotriazine wie z.B. des Simazins auch in Kombination mit Chlor eine so hohe Konzentration verwendet werden, dass angrenzende Zierpflanzen durch verspritztes Wasser geschädigt werden können.

Die nachstehenden Beispiele erläutern diese Unterschiede anhand von Versuchen mit verschiedenen Algenkulturen.

*Beispiel 1*

Bestimmung der minimalen Hemmkonzentration (MIC) gegen Algen im Agar-Inkorporationstest.

Die im Algen-Nährmedium über 14 Tage gewachsenen Kulturen der verschiedenen Algenstämme:

Oscillatoria geminata
Nostoc spec.
Phormidium foveolarum
Anacystis nidulans
Chlorella vulgaris
Chlorella pyrenoidosa
Scenedesmus spec.
Ulothrix subtilissima
Tribonema aequale

wurden im Algen-Nährmedium 1/100 bzw. 1/200 verdünnt. Die Suspensionen wurden auf Algen-Agar, der das Biocid in verschiedenen Konzentrationen enthielt, aufgetropft. Nach einer Bebrütung von 14 Tagen bei Zimmertemperatur unter 14 Stunden Licht - 10 Stunden Dunkel-Wechsel wurde nach Wuchs ausgewertet. Die Ergebnisse sind in Tabelle 1 aufgeführt.

Tabelle 1

MIC-Bestimmung (untersuchte Wirkstoff-Konzentration 3, 10, 30 mgl) im Agar-Inkorporationstest

| Stämme | A | B | C | D | E | F |
|---|---|---|---|---|---|---|
| Oscillatoria geminata | 3 | 30 | 3 | 3 | 3 | 10 |
| Nostoc spec. | 10 | 10 | 3 | 3 | 3 | 3 |
| Phormidium foveolarum | 30 | 3 | 3 | 3 | 3 | 3 |
| Anacystis nidulans | 3 | 30 | 3 | 3 | 3 | 3 |
| Chlorella vulgaris | 3 | 3 | >30 | 3 | 3 | 10 |
| Chlorella pyrenoidosa | 10 | 3 | >30 | 3 | 3 | 10 |
| Scenedemus spec. | 3 | 3 | 3 | 3 | 3 | 3 |
| Ulothrix subtilissima | 3 | 3 | 3 | 3 | 3 | 3 |
| Tribonema aequale | 3 | 3 | 3 | 3 | 3 | 3 |

A = $Cu_2O$
B = Quaternäre Ammonium-Mischung
C = Simazin [2-Chlor-4,6-bis(äthylamino)-s-triazol], die Hauptkomponente eines Algenbekämpfungsmittels zur Behandlung von Schwimmbädern, dass als Aquazine® durch Ciba-Geigy Corp., Greensboro, North Carolina, USA, handelsmässig betrieben ist
D = Terbutylazin (2-Chlor-4-äthylamino-6-t-butylamino-s-triazin)
E = 2-Chlor-4-cyclopropylamino-6-t-butylamino-s-triazin
F = 2-Chlor-4-cyclopropylamino-6-sek.-butylamino-s-triazin

Wie aus Tabelle 1 zu erkennen, haben die Kupfer-Verbindungen nur eine schwache Wirkung gegen Blaualgen. Simazin ist nicht wirksam gegen Chlorella-Stämme. Die Verbindungen D und E besitzen dagegen ein breites Spektrum gegen alle hier untersuchten Algenstämme.

*Beispiel 2*

Bestimmung der minimalen Hemmkonzentration (MIC) gegen Algen in Flüssigkultur

Die im Algen-Nährmedium über 14 Tage gewachsenen Kulturen der verschidenen Algenstämme

Oscillatoria geminata
Nostoc spec.
Phormidium foveolarum
Anacystis nidulans
Chlorella vulgaris
Chlorella pyrenoidosa
Scenedesmus spec.
Ulothrix subtilissima
Tribonema aequale

wurden in einem Gefäss zur Herstellung einer Mischkultur im Algen-Nährmedium 1/100 bzw. 1/200 verdünnt. Zu diesen Suspensionen wurden die Algicide einmalig dosiert. Die Bleichlauge wurde zugegeben sofort und nach jeweils einer Woche Bebrütung im Schüttler bei 18°C unter 14 Stunden Licht - 10 Stunden Dunkel-Wechsel. Ausgewertet wurde der Versuch durch visuelle Beobachtung nach 4, 6 und 8 Wochen. Nach 8wöchiger Bebrütung wurden ausserdem Fotographien angefertigt. Die Ergebnisse sind in Tabelle 2 aufgeführt.

Tabelle 2

MIC-Bestimmung in Flüssigkultur gegen eine Mischkultur von Algen

| Einmalige Dosierung | | Wöchentliche Dosierung | Wuchs | | |
|---|---|---|---|---|---|
| Algicid gemäss Beispiel 1 | Konz. (mg/l) | Bleichlauge Konz. (mg Aktivchlor/l) | 4 | 6 | 8 Wochen |
| C | 0,5 | – | + | + | + |
| | 1 | – | + | + | + |
| | 3 | – | (–) | (+) | + |
| | 30 | – | (–) | (+) | + |
| D | 0,5 | – | (+) | + | + |
| | 1 | – | (–) | (+) | + |
| | 3 | – | – | – | – |
| E | 0,5 | – | (+) | (+) | + |
| | 1 | – | (+) | (–) | (+) |
| | 3 | – | – | – | – |
| F | 0,5 | – | + | + | + |
| | 1 | – | (+) | + | + |
| | 3 | – | (–) | (–) | (+) |
| – | – | 0,1 | + | + | + |
| | – | 0,2 | + | + | + |
| | – | 0,3 | (–) | (+) | + |
| | – | 0,5 | (–) | (+) | + |
| D | 0,5 | 0,3 | – | – | – |
| C | 0,5 | 0,3 | + | + | + |
| F | 0,5 | 0,3 | (–) | (+) | + |
| E | 0,5 | 0,3 | (–) | (–) | (+) |
| D | 1 | 0,3 | – | – | – |
| C | 1 | 0,3 | (–) | (+) | + |
| F | 1 | 0,3 | (–) | – | – |
| E | 1 | 0,3 | (–) | (–) | (–) |
| Kontrolle | – | – | + | + | + |

\+ = Wuchs wie Kontrolle, (+) = Wuchs geringer als Kontrolle,
(–) = kaum erkennbarer Wuchs, – = kein Wuchs

Aus der Tabelle ist ersichtlich, dass mit einer einmaligen Dosierung von D oder E allein 3 ppm Aktivsubstanz und mit Bleichlauge allein mehr als 0,5 ppm Aktivchlor wöchentlich benötigt werden, um die Algenmischkultur in ihrem Wuchs zu hemmen. C und F allein sind nicht wuchshemmend gegen die untersuchte Mischkultur. In Kombination von D bzw. E bzw. F mit Bleichlauge tritt überraschend ein synergistischer Effekt auf. Eine einmalige Dosierung von 0,5 ppm D bzw. 1 ppm E oder 1 ppm F gemeinsam mit 0,3 ppm Aktivchlor wöchentlich reichen aus, um die Algen in ihrem Wuchs über 8 Wochen zu hemmen.

In der Kombination Simazin mit Aktivchlor werden für eine eventuelle Wuchshemmung mehr als 1 ppm benötigt. Eine Konzentration von mehr als 1 ppm Simazin ist aber schädlich gegen die neben dem Schwimmbad befindlichen höheren Pflanzen.

*Beispiel 3*

Behandlung eines Schwimmbades

Ein 55 $m^3$ grosses Privat-Schwimmbad wurde über 4 Monate im Sommer mit Terbutylazin und Trichorisocyanursäure, NaOCl oder CaOCl behandelt. Das Schwimmbad hatte eine Sandfilteranlage mit einer Umwälzung von 40 $m^3/h$. Die Filteranlage wurde ca. 6 h/Tag angestellt.

Das Wasser hatte eine Härte von 24° dH, die pH-Wert-Einstellung auf pH = 7,2 erfolgte jeweils mit $NaHSO_4$.

Die Chlor-Dosierung (erst vor allem Trichlorisocyanursäure, dann mehr NaOCl oder CaOCl) erfolgte alle 8-14 Tage, um einen Aktivchlor-Gehalt von $\geqslant 1{,}2 < 2$ ppm $Cl_2$ zu halten.

Die 50%ige wässrige Formulierung von Terbutylazin wurde alle 2-5 Wochen zudosiert, um eine Terbutylazin-Konzentration (dünnschichtchromatographisch bestimmt) von $> 0{,}5$ ppm $\leqslant 1$ ppm aufrechtzuhalten.

Das klare Wasser hatte über den gesamten Zeitraum von 4 Monaten trotz voller Sonneneinstrahlung keinen Bakterien- sowie Algenbewuchs, es wurde keinerlei Schäumung des Wassers und Schädigung der das Becken umgebenden Pflanzen beobachtet.

*Beispiel 4*

Wirkung im Modellkreislauf

Die auf dem Dach eines 3stöckigen Hauses stehenden Modellkreisläufe bestehen aus:

a) einem Kunststoff-Fass mit einem Volumen von 120 l
b) einer Siemens-Pumpe (21 l/min bei 3 m Förderhöhe)
c) einem Kühlturm mit Kiefer-, Lerche-, Eiche-, Fichte-, Asbestzement- und PVC-Platte.

Verdunstetes Wasser (ca. 10-20 l/24 h) wird kontinuerlich durch Frischwasser (5-7 l/h) ersetzt.

Es erfolgt eine natürliche Beimpfung durch Staub- und Polleneinfall (direkte Sonneneinstrahlung).

Die 3 Modellkreisläufe werden mit

1. 3 ppm a.i. $Cl_2$ Na-Dichlorisocyanursäure 2 ×/Woche
2. 3 ppm a.i. Terbutylazin (50%ige wässrige Formulierung) 2 ×/Woche
3. 3 ppm a.i. $Cl_2$ Na-Dichlorisocyanursäure 2 ×/Woche
   + 2 ppm a.i. Terbutylazin (50%ige wässrige Formulierung) 2 ×/Woche behandelt.

2 ppm a.i. Terbutylazin werden dosiert, weil bei einer Halbwertszeit von ca. 20 h im System durch ca. 5-7 l/h Frischwasser die Konzentration der Wirksubstanz durch diese stossweise Behandlung auf ca. 0,1 - 0,2 ppm fällt. Eine Unterschreitung dieser 0,1-0,2 ppm sollte für eine erfolgreiche Behandlung vermieden werden.

Der mit der Na-Dichlorisocyanursäure behandelte Modellkreislauf zeigt nach ca. 4 Wochen, der mit Terbutylazin behandelte Kreislauf nach ungefähr der gleichen Zeit und der unbehandelte Kreislauf nach 1 Woche Wuchs von Algenschleim auf den verschiedenen Hölzern.

Der mit der Kombination von Na-Dichlorisocyanursäure und Terbutylazin behandelte Kreislauf zeigt auch noch nach 90 Tagen Behandlung keinerlei Anzeichen von Algen- oder Bakterienschleimbildung.

**Patentansprüche**

1. Verwendung eines Gemisches von
a) an einem 2-Chlor-4,6-diamino-s-triazin der Formel I

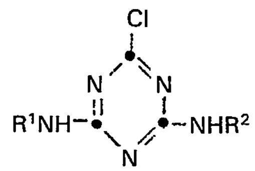

I

worin $R^1$ Alkyl mit 2-5 C-Atomen oder Cycloalkyl mit 3-5 C-Atomen und $R^2$ Alkyl mit 3-5 C-Atomen oder Cycloalkyl mit 3-5 C-Atomen ist, und

b) aktivem Halogen oder einem Aktivhalogen abgebenden Mittel zur gleichzeitigen Algenbekämpfung und Desinfektion in Wasserbecken, insbesondere Schwimmbecken, sowie in Kühlwasserkreisläufen, wobei die Komponente a) in einer Konzentration von 0,1 bis 1 mg/l und die Komponente b) in einer Konzentration von 0,05 bis 3 mg/l verwendet wird.

2. Verwendung gemäss Anspruch 1, dadurch gekennzeichnet, dass man als Komponente a) das 2-Chlor-4-äthylamino-6-tert.-butylamino-s-triazin verwendet.

3. Verwendung gemäss Anspruch 1, dadurch gekennzeichnet, dass man als Komponente b) aktives Chlor oder ein Aktivchlor abgebendes Mittel, insbesondere Chlorbleichlauge, Dichlor- oder Trichlorisocyansäure, verwendet.

**Claims**

1. Use of a mixture of
a) a 2-chloro-4,6-diamino-s-triazine of the formula I

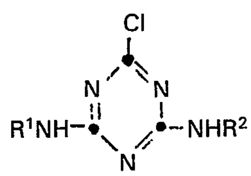

I

wherein $R^1$ is alkyl having 2-5 C atoms or cycloalkyl having 3-5 C atoms, and $R^2$ is alkyl having 3-5 C atoms or cycloalkyl having 3-5 C atoms, and

b) active halogen or an agent releasing active halogen, for the combating of algae and simultaneous disinfection in water reservoirs, especially in swimming baths, and also in cooling-water circulation systems, the component a) being used at a concentration of 0.1 to 1 mg/litre, and the component b) at a concentration of 0.05 to 3 mg/litre.

2. Use according to claim 1, characterized in that 2-chloro-4-ethylamino-6-tert-butylamino-s-triazine is used as component a).

3. Use according to claim 1, characterized in that active chlorine or an agent releasing active chlorine, particularly chlorine bleach liquor, dichloro- or trichloroisocyanuric acid, is used as component b).

**Revendications**

1. Application d'un mélange constitué

a) d'une chloro-2 diamino-4,6 s-triazine répondant à la formule I

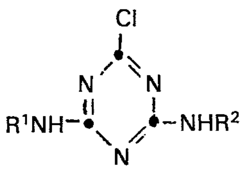

I

dans laquelle $R^1$ représente un radical alkyle contenant de 2 à 5 atomes de carbone ou un radical cycloalkyle contenant de 3 à 5 atomes de carbone, et $R^2$ représente un radical alkyle contenant de 3 à 5 atomes de carbone ou un radical cycloalkyle contenant de 3 à 5 atomes de carbone, et

b) d'halogène actif ou d'un agent cédant un halogène actif, pour combattre des algues et, en même temps, réaliser une désinfection dans des bassins et réservoirs d'eau, plus particulièrement des piscines, ainsi que dans des circuits d'eau de refroidissement, la composante a) étant utilisée en une concentration de 0,1 à 1 mg/litre et la composante b) en une concentration de 0,05 à 3 mg/litre.

2. Application selon la revendication 1, caractérisée en ce qu'on utilise, comme composante a), la chloro-2 éthylamino-4 tert-butylamino-6 s-triazine.

3. Application selon la revendication 1, caractérisée en ce qu'on utilise, comme composante b), du chlore actif ou un agent cédant du chlore actif, plus particulièrement une lessive de blanchiment au chlore, l'acide dichloro-isocyanurique ou l'acide trichloro-isocyanurique.